# EUROPEAN PATENT SPECIFICATION

(11) **EP 3 173 181 B1**
(45) Date of publication and mention of the grant of the patent: **26.12.2018**
(21) Application number: 15853663.1
(22) Date of filing: 21.07.2015
(51) Int. Cl.: B23K 31/00, B23K 9/167, B23K 15/00, G01B 5/20, B23K 37/04, B23Q 17/00

(54) **WARPING CORRECTION METHOD**
VERZERRUNGSKORREKTURVERFAHREN
PROCÉDÉ DE CORRECTION DE GAUCHISSEMENT

(30) Priority: 31.10.2014 JP 2014223420
(43) Date of publication of application: 31.05.2017
(73) Proprietor: Mitsubishi Heavy Industries, Ltd., Tokyo 108-8215 (JP)
(72) Inventor: TERAMAE, Takuma, Tokyo 108-8215 (JP); TSUBOTA, Shuho, Tokyo 108-8215 (JP); FUKUMOTO, Seiji, Tokyo 108-8215 (JP)
(74) Representative: Intès, Didier Gérard André
(86) International application number: PCT/JP2015/070712
(87) International publication number: WO 2016/067685

(56) References cited:
- WO-A1-2012/041747
- JP-A- H09 216 057
- JP-A- 2001 252 778
- JP-A- 2001 252 778
- JP-A- 2007 090 412
- JP-A- 2007 090 412
- JP-A- 2014 128 821

## Description

### Field

The present invention relates to a distortion correction method for correcting a weld distortion in a weld portion between a fitting member and a rod-like member such as a raw pipe.

### Background

In the prior art, there is known a weld distortion removal method for removing a weld distortion generated in the vicinity of a weld bead formed in a weld portion of a steel material (for example, see Patent Literature 1). In this removal method, a weld distortion in the vicinity of the weld portion of the steel material is removed by heating the weld bead using a tungsten inert gas (TIG) welder under a predetermined heating condition. Here, the steel material includes a pair of steel plates welded perpendicular to each other. Specifically, the weld portion is formed by performing fillet welding such that a vertical steel plate is welded onto a horizontal steel plate.

### Citation List

### Patent Literature

Patent Literature 1: JP 2004-25225 A
Patent Literature 2: JP2001252778, regarded as the closest prior art, and
Patent Literature 3: JP200790412.

### Summary

### Technical Problem

However, a weld distortion is generated, for example, in a weld portion formed by welding a raw pipe as the rod-like member and a fitting member installed in an axial end of the raw pipe. In this case, the fitting member may be tilted with respect to the axial direction of the raw pipe due to the weld distortion. For this reason, the tilt of the fitting member with respect to the axial direction of the raw pipe is corrected. However, in order to correct the tilt, it is necessary to measure the tilt of the fitting member with respect to the axial direction of the raw pipe with high accuracy. Unfortunately, the raw pipe does not have a portion serving as a measurement reference. Therefore, it is difficult to appropriately correct the tilt of the fitting member with respect to the axial direction of the raw pipe.

In view of the aforementioned problems, an object of the present invention is to provide a distortion correction method capable of appropriately correcting the tilt of the fitting member with respect to the rod-like member.

### Solution to Problem

According to an aspect of the present invention, a distortion correction method according to claim 1 is provided.

In this configuration, in the reference surface forming process, a reference surface as a circumferential surface can be formed in an outer circumference of the rod-like member. In the rod-like member installation process, by placing the reference surface on the roller contact member, the rod-like member can rotate by following the reference surface. In addition, in the measurement process, since the fitting member rotates along with the rod-like member rotating by following the reference surface, a tilt of the fitting member with respect to the rod-like member can be measured with high accuracy using the measurement device. In addition, in the distortion correction process, the tilt of the fitting member with respect to the rod-like member can be corrected on the basis of a result of the measurement of the measurement process. In this manner, even when the fitting member is welded to at least one longitudinal end of the rod-like member, it is possible to measure the tilt of the fitting member with respect to the rod-like member with high accuracy by forming the reference surface in the rod-like member. Therefore, in the distortion correction process, it is possible to appropriately correct the tilt of the fitting member with respect to the rod-like member. Note that, in the distortion correction process, welding is performed for the weld portion in order to shape weld beads formed in the weld portion between the rod-like member and the fitting member as well as in order to correct the tilt of the fitting member with respect to the rod-like member. Note that the weld portion is a beveling portion formed by making the rod-like member and the fitting member abut onto each other, and the beveling portion is fabricated perpendicular to the reference surface. That is, the abutting surface of the beveling portion between the rod-like member and the fitting member is a surface perpendicular to the axial direction of the rod-like member.

Advantageously, in the distortion correction method, the weld portion between the raw tube and the fitting member is formed by applying high-density energy welding between the raw tube and the fitting member.

In this configuration, since the rod-like member and the fitting member can be joined to each other by high-density energy welding, it is possible to reduce a weld distortion between the rod-like member and the fitting member and provide high quality in the weld portion between the rod-like member and the fitting member. Note that the high-density energy welding may include electron beam welding, laser beam welding, and the like.

Advantageously, in the distortion correction method, in the distortion correction process, TIG welding or high-density energy welding is applied to the weld portion.

In this configuration, a weld bead formed in the weld portion between the rod-like member and the fitting member can be appropriately shaped by TIG welding or high-density energy welding. For this reason, the joining (main welding) between the rod-like member and the fitting member can be performed, for example, by electron beam welding, and distortion correction can be performed by electron beam welding. Alternatively, the main welding can be performed, for example, by electron beam welding, and the distortion correction can be performed by TIG welding.

Advantageously, in the distortion correction method, in the measurement process, a dial gauge is employed as the measurement device, and the fitting member has a circumferential surface onto which the dial gauge abuts.

In this configuration, it is possible to measure the tilt of the fitting member with respect to the rod-like member with high accuracy using the dial gauge.

### Brief Description of Drawings

FIG. 1 is a top plan view illustrating a rod-like member and a fitting member serving as a target of a distortion correction method according to an embodiment of the invention.
FIG. 2 is a side view illustrating a jig used in the distortion correction method according to the embodiment of the invention.
FIG. 3 is a front view illustrating the jig used in the distortion correction method according to the embodiment of the invention.
FIG. 4 is a flowchart illustrating a distortion correction method according to the embodiment of the invention.

### Description of Embodiments

Embodiments according to the present invention will now be described in details with reference to the accompanying drawings. Note that these embodiments are not intended to limit the scope of the invention, and elements of the embodiments described below include substitutes or substantial equivalents that can be easily been made by a person ordinarily skilled in the art. In addition, the elements described below may be appropriately combined, and several embodiments may also be combined with each other.

### First Embodiment

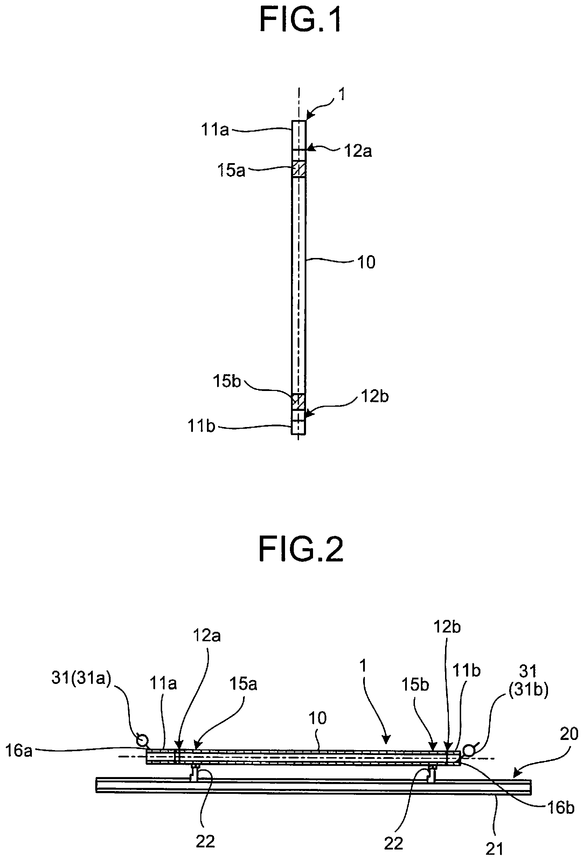

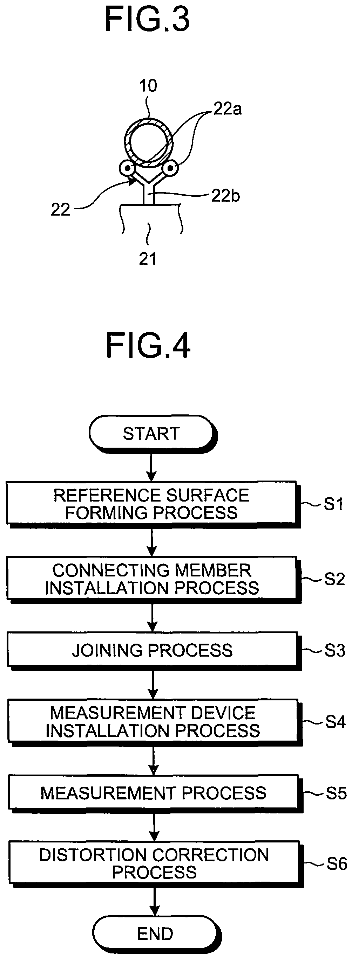

FIG. 1 is a top plan view illustrating a fitting member and a rod-like member serving as a target of a distortion correction method according to an embodiment of the invention. FIG. 2 is a side view illustrating a jig used in the distortion correction method according to the embodiment of the invention. FIG. 3 is a front view illustrating the jig used in the distortion correction method according to the embodiment of the invention. FIG. 4 is a flowchart illustrating the distortion correction method according to the embodiment of the invention.

The distortion correction method according to the embodiment is a method of correcting a weld distortion generated in a connecting member 1 as a correction target by performing TIG welding for a weld portion formed in the connecting member 1. First, the connecting member 1 as a target of the distortion correction method will be described with reference to FIG. 1.

As illustrated in FIG. 1, the connecting member 1 is, for example, a member provided at a nuclear power facility, and is a member for connecting other members to each other. The connecting member 1 has a raw pipe 10 as a rod-like member and a pair of fitting members 11a and 11b installed in both axial ends of the raw pipe 10 by welding.

The raw pipe 10 is a cylindrical tube. The fitting member 11a is joined to one axial end side by welding, and the fitting member 11b is joined to the other axial end side by welding. In addition, on an outer circumferential surface of the raw pipe 10, a reference surface 15a as a circumferential surface formed over the entire circumference is fabricated in one axial end side, and a reference surface 15b as a circumferential surface formed over the entire circumference is fabricated in the other axial end side.

A pair of fitting members 11a and 11b are different members and are joined to both ends of the raw pipe 10 by electron beam welding. Here, when they are joined, beveling portions are formed between the raw pipe 10 and a pair of fitting members 11a and 11b as the pair of fitting members 11a and 11b and the raw pipe 10 abut onto each other. The beveling portions are fabricated perpendicular to the reference surfaces 15a and 15b formed in the raw pipe 10. That is, the abutting surfaces between the raw pipe 10 and the pair of fitting members 11a and 11b in the beveling portions are surfaces perpendicular to the axial direction of the raw pipe 10. In addition, a weld portion 12a is formed between the raw pipe 10 and the fitting member 11a by electron beam welding, and a weld portion 12b is formed between the raw pipe 10 and the fitting member 11b by electron beam welding.

The fitting members 11a and 11b are provided with measurement surfaces 16a and 16b, respectively, where a dial gauge 31 described below makes contact. Each measurement surface 16a and 16b is a circumferential surface formed over the entire circumference of the inner and outer surface of each fitting member 11a and 11b, respectively, in a circumferential direction of the raw pipe 10. For example, the measurement surface 16a formed in the fitting member 11a is an outer circumferential surface formed over the entire circumference of the outer surface, and the measurement surface 16b formed in the fitting member 11b is an inner circumferential surface formed over the entire circumference of the inner surface. The dial gauge 31 accesses the fitting member 11a and 11b from the outside in the axial direction to make contact with the measurement surfaces 16a and 16b, respectively.

Although this embodiment is applied to the connecting member 1 having the raw pipe 10 as a rod-like member and a pair of fitting members 11a and 11b welded to both ends of the raw pipe 10, a correction target member of the distortion correction method is not limited to the connecting member 1. The correction target member of the distortion correction method may be any member as long as it includes a rod-like member and a fitting member.

Next, a jig 20 used in the distortion correction method will be described with reference to FIGS. 2 and 3. This jig 20 rotatably supports the connecting member 1 while the axial direction of the connecting member 1 is in the horizontal direction. The jig 20 has a support base 21 and a pair of roller contact members 22 provided on the support base 21.

The support base 21 is formed long in the axial direction of the installed connecting member 1 to be longer than the connecting member 1. A pair of roller contact members 22 is provided to match positions of the reference surfaces 15a and 15b formed in the connecting member 1. As illustrated in FIG. 3, each roller contact member 22 has a pair of rollers 22a abutting onto the reference surfaces 15a and 15b of the installed connecting member 1 and a bearing portion 22b that rotatably supports a pair of rollers 22a. A pair of rollers 22a is provided side by side with a predetermined distance at which the connecting member 1 can be installed, that is, with a distance shorter than the outer diameter of the raw pipe 10. The bearing portion 22b rotatably supports the pair of rollers 22a and stands on the support base 21.

A pair of dial gauges 31 (31a and 31b) make contact with the connecting member 1 placed on a pair of roller contact member 22 of the jig 20. Specifically, one of the dial gauges 31a makes contact with the measurement surface 16a of the fitting member 11a welded to one end of the raw pipe 10, and the other dial gauge 31b makes contact with the measurement surface 16b of the fitting member 11b welded to the other end of the raw pipe 10.

Next, a series of operations relating to the distortion correction method according to the embodiment of the invention will be described with reference to FIG. 4. First, before welding a pair of fitting members 11a and 11b to the raw pipe 10, the reference surfaces 15a and 15b are fabricated on the outer circumferential surface in both sides of the raw pipe 10 (step S1: reference surface forming process). Then, the raw pipe 10 is rotatably installed on the jig 20 across a pair of roller contact members 22 of the jig 20 such that the reference surfaces 15a and 15b make roller contact with a pair of roller contact members 22 (step S2: connecting member installation process). In addition, the fitting members 11a and 11b are joined to both axial ends of the raw pipe 10 provided with the reference surfaces 15a and 15b by electron beam welding to form the connecting member 1 (step S3: joining process).

After the joining process S3, a pair of dial gauges 31 (31a and 31b) are installed such that they make contact with the measurement surfaces 16a and 16b of the fitting members 11a and 11b, respectively, of the connecting member 1 (step S4: measurement device installation process). Then, by rotating the connecting member 1, a displacement of the measurement surface 16a with respect to the reference surface 15a and a displacement of the measurement surface 16b with respect to the reference surface 15b are measured over the entire circumferences of the measurement surfaces 16a and 16b (step S5: measurement process). Incidentally, assuming that the position of the dial gauge 31 installed in the measurement device installation process S4 is set as an initial position, as a displacement from this initial position increases, a tilt of the fitting member 11a or 11b with respect to the axial direction of the raw pipe 10 increases.

The tilt of the fitting member 11a or 11b with respect to the axial direction of the raw pipe 10 is corrected by applying TIG welding to the weld portions 12a and 12b between the raw pipe 10 and the fitting members 11a and 11b on the basis of the measurement result of the measurement process S5 (step S6, distortion correction process). Specifically, TIG welding is applied to the weld portions 12a and 12b such that the displacement measured in the measurement process S5 is reduced.

Meanwhile, since the raw pipe 10 and the fitting members 11a and 11b are welded by electron beam welding, weld beads of the weld portions 12a and 12b are not trimmed well in some cases. For this reason, in the distortion correction process S6, appearance of the weld beads formed on the weld portions 12a and 12b are inspected, and TIG welding is performed to the weld portions 12a and 12b where weld beads are not trimmed well.

In this manner, according to this embodiment, even when the fitting members 11a and 11b are installed in both axial ends of the raw pipe 10 by welding, the reference surfaces 15a and 15b are formed in the outer circumference of the raw pipe 10. Therefore, a tilt of the fitting members 11a and 11b with respect to the raw pipe 10 can be measured using the dial gauge 31 with high accuracy. Therefore, in the distortion correction process S6, the tilt of the fitting members 11a and 11b with respect to the raw pipe 10 can be corrected appropriately. In addition, in the distortion correction process S6, it is possible to shape the weld beads formed in the weld portions 12a and 12b between the raw pipe 10 and the fitting members 11a and 11b. Therefore, it is possible to appropriately trim appearance of the weld portions 12a and 12b.

According to this embodiment, since the raw pipe 10 and the fitting members 11a and 11b can be joined to each other by electron beam welding, it is possible to reduce a weld distortion between the raw pipe 10 and the fitting members 11a and 11b. Therefore, it is possible to provide high quality in the weld portions 12a and 12b between the raw pipe 10 and the fitting members 11a and 11b.

According to this embodiment, since TIG welding is applied to the weld portions 12a and 12b between the raw pipe 10 and the fitting members 11a and 11b, it is possible to appropriately shape the weld beads formed in the weld portions 12a and 12b by TIG welding. In particular, when the weld portions 12a and 12b are formed by electron beam welding, it is possible to appropriately shape weld beads by performing TIG welding.

According to this embodiment, displacements of the measurement surfaces 16a and 16b with respect to the reference surfaces 15a and 15b can be measured by allowing the dial gauge 31 to make contact with the measurement surfaces 16a and 16b of the fitting members 11a and 11b. Therefore, it is possible to measure the tilts of the fitting members 11a and 11b with respect to the axial direction of the raw pipe 10 with high accuracy.

Note that, although electron beam welding is employed to weld the raw pipe 10 and the fitting members 11a and 11b to each other according to this embodiment, the present invention is not limited thereto. For example, laser beam welding may be employed to join the raw pipe 10 and the fitting members 11a and 11b to each other. In addition, any high-density energy welding method may also be employed.

According to this embodiment, in the distortion correction process S6, TIG welding is performed for the weld portions 12a and 12b between the raw pipe 10 and the fitting members 11a and 11b. However, without limiting to the TIG welding, any welding method may also be employed as long as a filler material is applied.

According to this embodiment, the fitting members 11a and 11b are installed in both axial ends of the raw pipe 10. However, the fitting member 11a or 11b may be installed in at least one end without a particular limitation.

According to this embodiment, the raw pipe 10 is employed as a rod-like member. Instead, the rod-like member may have any shape such as a columnar shape, a prism shape, or a rectangular pipe shape without a particular limitation.

### Reference Signs List

- 1: CONNECTING MEMBER
- 10: RAW PIPE
- 11a, 11b: FITTING MEMBER
- 12a, 12b: WELD PORTION
- 15a, 15b: REFERENCE SURFACE
- 16a, 16b: MEASUREMENT SURFACE
- 20: JIG
- 21: SUPPORT BASE
- 22: ROLLER CONTACT MEMBER
- 22a: ROLLER
- 22b: BEARING PORTION
- 31: DIAL GAUGE

## Claims

1. A distortion correction method comprising:
a reference surface forming process for fabricating two reference surfaces (15a, 15b) as a circumferential surface in an outer circumference of a raw tube (10) having at least one longitudinal end to which a fitting member (11a, 11b) is welded;
forming two measurement surfaces (16a, 16b) at which a measurement is performed;
a raw tube installation process for installing the two reference surfaces (15a, 15b) of the raw tube (10) in a roller contact member (22) that rotatably supports the raw tube (10) by using the longitudinal direction of the raw tube as an axial direction;
a measurement process for measuring a tilt of the fitting member (11a, 11b) rotated along with the raw tube (10) by the roller contact member (22) with respect to the axial direction of the raw tube (10) using a measurement device (31); and
a distortion correction process for forming a weld portion (12a, 12b) by welding the raw tube (10) and the fitting member (11a, 11b) on the basis of a result of the measurement of the measurement process to correct the tilt of the fitting member (11a, 11b) with respect to the axial direction of the raw tube (10);
**characterized in that** both of the two reference surfaces (15a, 15b) are formed on the outer circumference of the raw tube (10), and one of the two measurement surfaces (16a, 16b) is formed over an entire outer circumferential surface of the fitting member (11a, 11b), and another of the two measurement surfaces (16a, 16b) is formed over an entire inner circumferential surface of the fitting member (11a, 11b).

2. The distortion correction method according to claim 1, wherein the weld portion (12a, 12b) between the raw tube (10) and the fitting member (11a, 11b) is formed by applying high-density energy welding between the raw tube (10) and the fitting member (11a, 11b).

3. The distortion correction method according to claim 1 or 2, wherein, in the distortion correction process, TIG welding or high-density energy welding is applied to the weld portion (12a, 12b).

4. The distortion correction method according to any one of claims 1 to 3, wherein, in the measurement process, a dial gauge is employed as the measurement device (31), and the fitting member (11a, 11b) has a circumferential surface onto which the dial gauge abuts.

## Patentansprüche

1. Verzerrungskorrekturverfahren, umfassend:
einen Referenzflächenausbildungsvorgang zum Herstellen von zwei Referenzflächen (15a, 15b) als eine Umfangsfläche in einem Außenumfang eines Rohrohres (10), das mindestens ein Längsende aufweist, an das ein Passelement (11a, 11b) angeschweißt ist;
Bilden von zwei Messflächen (16a, 16b), an denen die Messung ausgeführt wird;
ein Rohrohr-Installationsvorgang zum Installieren der zwei Referenzflächen (15a, 15b) des Rohrohres (10) in einem Rollenkontaktelement (22), das das Rohrohr (10) durch Anwenden der Längsrichtung des Rohrohres als eine axiale Richtung drehbar trägt;
einen Messvorgang zum Messen einer Neigung des Passelements (11a, 11b), das, unter Verwendung einer Messvorrichtung (31), zusammen mit dem Rohrohr (10) durch das Rollenkontaktelement (22) in Bezug auf die axiale Richtung des Rohrohres (10) gedreht wird; und
einen Verzerrungskorrekturvorgang zum Bilden eines Schweißabschnitts (12a, 12b) durch Verschweißen des Rohrohres (10) mit dem Passelement (11a, 11b) auf Basis eines Ergebnisses der Messung des Messvorgangs zum Korrigieren der Neigung des Passelements (11a, 11b) in Bezug auf die axiale Richtung des Rohrohres (10);
**dadurch gekennzeichnet, dass** beide der zwei Referenzflächen (15a, 15b) auf dem Außenumfang des Rohrohres (10) gebildet werden, und einer der zwei Messflächen (16a, 16b) über eine gesamte Außenumfangsfläche des Passelements (11a, 11b) gebildet wird, und eine andere der zwei Messflächen (16a, 16b) über eine gesamte Innenumfangsfläche des Passelements (11a, 11b) gebildet wird.

2. Verzerrungskorrekturverfahren nach Anspruch 1, wobei der Schweißabschnitt (12a, 12b) zwischen dem Rohrohr (10) und dem Passelement (11a, 11b) durch Anwenden von Schweißen mit hoher Energiedichte zwischen dem Rohrohr (10) und dem Passelement (11a, 11b) gebildet wird.

3. Verzerrungskorrekturverfahren nach Anspruch 1 oder 2, wobei, im Verzerrungskorrekturvorgang, ein WIG-Schweißen oder ein Schweißen mit hoher Energiedichte auf den Schweißabschnitt (12a, 12b) angewendet wird.

4. Verzerrungskorrekturverfahren nach einem der Ansprüche 1 bis 3, wobei bei dem Messvorgang eine Messuhr als Messvorrichtung (31) verwendet wird und das Passelement (11a, 11b) eine Umfangsfläche aufweist, auf der die Messuhr aufliegt.

## Revendications

1. Procédé de correction de gauchissement, comprenant :
un processus de formation de surfaces de référence destiné à fabriquer deux surfaces de référence (15a, 15b) sous la forme d'une surface circonférentielle sur une circonférence extérieure de tube brut (10) ayant au moins une extrémité longitudinale à laquelle est soudé un élément à assembler (11a, 11b) ;
la formation de deux surfaces de mesure (16a, 16b) sur lesquelles une mesure est effectuée ;
un processus d'installation de tube brut destiné à installer les deux surfaces de référence (15a, 15b) du tube brut (10) sur un élément de contact à rouleaux (22) qui supporte en rotation le tube brut (10) en utilisant la direction longitudinale du tube brut comme une direction axiale ;
un processus de mesure destiné à mesurer une inclinaison de l'élément à assembler (11a, 11b) mis en rotation conjointement avec le tube brut (10) par l'élément de contact à rouleaux (22) par rapport à la direction axiale du tube brut (10), à l'aide d'un dispositif de mesure (31) ; et
un processus de correction de gauchissement destiné à former une partie de soudure (12a, 12b) en soudant le tube brut (10) et l'élément à assembler (11a, 11b) sur la base d'un résultat de la mesure du processus de mesure, pour corriger l'inclinaison de l'élément à assembler (11a, 11b) par rapport à la direction axiale du tube brut (10) ;
**caractérisé en ce que** les surfaces de référence (15a, 15b) sont toutes deux formées sur la circonférence extérieure du tube brut (10), et l'une des deux surfaces de mesure (16a, 16b) est formée sur l'intégralité d'une surface circonférentielle extérieure de l'élément à assembler (11a, 11b), et une autre des deux surfaces de mesure (16a, 16b) est formée sur l'intégralité d'une surface circonférentielle intérieure de l'élément à assembler (11a, 11b).

2. Procédé de correction de gauchissement selon la revendication 1, dans lequel la partie de soudure (12a, 12b) entre le tube brut (10) et l'élément à assembler (11a, 11b) est formée par application d'un soudage à énergie à haute densité entre le tube brut (10) et l'élément à assembler (11a, 11b) .

3. Procédé de correction de gauchissement selon la revendication 1 ou 2, dans lequel dans le processus de correction de gauchissement, un soudage TIG ou un soudage à énergie à haute densité est appliqué sur la partie de soudure (12a, 12b).

4. Procédé de correction de gauchissement selon l'une quelconque des revendications 1 à 3, dans lequel, dans le processus de mesure, un comparateur à cadran est employé en tant que dispositif de mesure (31), et l'élément à assembler (11a, 11b) présente une surface circonférentielle contre laquelle le comparateur à cadran vient en butée.
